# EUROPÄISCHE PATENTSCHRIFT

(11) **EP 3 374 191 B1**
(45) Veröffentlichungstag und Bekanntmachung des Hinweises auf die Patenterteilung: **10.05.2023**
(21) Anmeldenummer: 16794519.5
(22) Anmeldetag: 09.11.2016
(51) Int. Cl.: C09B 67/02, C09B 67/08, C09B 67/22, C09D 11/037, C09D 11/54, C09K 9/02, C09K 11/02, C09K 11/06, B42D 25/29, B42D 25/30, B42D 25/382, B42D 25/387, D21H 21/40, G07D 7/1205, C08L 61/06, C08L 61/12, C08L 61/28, C08L 61/30, C08L 61/34

(54) **SICHERHEITSPIGMENT BASIEREND AUF KERN-HÜLLE-TEILCHEN UND VERFAHREN ZUM HERSTELLEN DESSELBEN**
CORE-SHELL PARTICLE-BASED SECURITY PIGMENT AND METHOD FOR THE PRODUCTION THEREOF
PIGMENT DE SÉCURITÉ À BASE DE PARTICULES COEUR-ÉCORCE ET SON PROCÉDÉ DE PRODUCTION

(30) Priorität: 11.11.2015 DE 102015014525
(43) Veröffentlichungstag der Anmeldung: 19.09.2018
(73) Patentinhaber: Giesecke+Devrient Currency Technology GmbH, 81677 München (DE)
(72) Erfinder: KECHT, Johann, 81677 München (DE); SCHLOSSBAUER, Axel, 80799 München (DE)
(74) Vertreter: Giesecke + Devrient IP
(86) Internationale Anmeldenummer: PCT/EP2016/001865
(87) Internationale Veröffentlichungsnummer: WO 2017/080656

(56) Entgegenhaltungen:
- WO-A1-2008/141972
- DE-A1-102004 063 217
- DE-A1-102012 013 244
- US-A- 5 082 757

## Beschreibung

Die Erfindung betrifft ein Sicherheitspigment basierend auf Kern-Hülle-Teilchen, umfassend einen auf einem porösen Additionspolymer basierenden Kern, eine auf einem Kondensationspolymer basierende Hülle und einen im Kern in fein verteilter oder gelöster Form vorliegenden Merkmalsstoff. Die Erfindung betrifft des Weiteren ein Herstellungsverfahren für das Merkmalsstoff enthaltende Kern-Hülle-Teilchen.

Die Erfindung betrifft insbesondere vergleichsweise einfach herzustellende Kern-Hülle-Teilchen, welche einen im Kern gelösten oder fein verteilten optischen Merkmalsstoff, z.B. einen organischen oder anorganischen Lumineszenz- oder Absorberfarbstoff, enthalten. Durch die Beschichtung des Kerns aus Additionspolymer, speziell ein Polyurethan-Kern oder ein Polyharnstoff-Kern mit einer umhüllenden Schicht aus einem Kondensationspolymer, wird das Pigment gegen Migration und Ausbluten geschützt. Der Vorteil der erfindungsgemäßen Teilchen besteht u.a. darin, dass das Kondensationspolymer der äußeren Hülle durch eine saure Kondensationsreaktion gebildet wird und dadurch eine dichte, wenig poröse Hülle gebildet wird. Diese äußere Hülle schützt den inneren, porösen, aber leicht herzustellenden Polyurethan-Kern optimal vor Angriffen mit Lösemitteln, schwachen Säuren und Basen oder redoxaktiven Substanzen.

Die Druckschrift US 5795379 A beschreibt die Einbringung von lumineszierenden Farbstoffen in festes Harz. Die Schrift beinhaltet ausschließlich die Verwendung von vernetzten Polyharnstoffen und Polyurethanen als Duromer-Matrix sowie Verfahren zur Herstellung derselben. Eine zusätzliche Umhüllung gemahlener Harzpartikel wird nicht erwähnt.

Die Druckschrift US 4306040 beschreibt ein Kern-Hülle-Partikel mit einem leicht vernetzten Elastomer-Polymer als Kernmaterial und einem Thermoplast-Polymer als Hülle. Ziel ist eine verbesserte Kompatibilität des Kerns mit Polyamiden, welche durch das Einbringen der Elastomere eine höhere Schlagresistenz erhalten. Der Anteil der Hülle am Gesamtmaterial beträgt 10 bis 50 Gewichtsprozent.

Die erfindungsgemäße technische Lösung mit zwei stark vernetzen Duromeren bietet einen deutlich besseren Schutz vor chemischen Angriffen auf den im Kern verteilten Merkmalstoff, da hier weniger Diffusionspfade auftreten und kein Aufquellen möglich ist.

Die Druckschrift US 6417269 B1 beschreibt einen Diol-Latex, der in ein Kondensationsreaktionsmedium eingeführt wird, um eine Kombination des Diol-Polymers mit dem Kondensationspolymer zu erreichen. Es wird jedoch kein Polyurethan/ Polyharnstoff im Kern eingesetzt und der Syntheseprozess ist vergleichsweise aufwändig (Schutzgas, Umgang mit reaktiven Monomeren) und benötigt zumeist toxische, metallhaltige Katalysatoren zur Propagation der Kondensationsreaktion.

Die Druckschrift WO 2004/104060 A2 beschreibt ein verbrennbares Kern-Hülle-Partikel als Farbpigment für thermisch aktivierte Direktschreibmethoden, wobei das Partikel ein Nitroharz als Kernmaterial und ein Ethylen-basiertes Polymer als Hülle aufweist. Das Verhältnis zwischen Hülle und Kernmaterial kann von 20:1 bis 0,2:1 reichen. Die Hülle bedeckt jedoch nicht zwingend die gesamte Oberfläche des Kerns und könnte somit auch nicht den Schutz eines eingebetteten Merkmalstoffs garantieren.

Die Druckschrift US 2014/0275395 A1 beschreibt ein Kern-Hülle-Partikel mit einem Kern aus Polyurethan und einer Hülle aus Polyacrylat. Solche Partikel sind u.a. als Additive für Inkjet-Anwendungen geeignet, da sie bestimmte Tinteneigenschaften (z.B. die Fähigkeit des Ausstoßens ("jetting"), Wischfestigkeit ("smear fastness")) verbessern können. Die verwendete Polyacrylathülle (d.h. ein thermoplastischer Latex) schützt einen porösen Kern aus einem Polyurethan (der durch einen einfach durchzuführenden Extrusionsprozess erhältlich ist) unzureichend gegenüber Lösemittel, welche das Acrylatpolymer aufquellen können. Ein so beschaffenes Farbpigment ist gegen Lösemittelangriffe nicht ausreichend geschützt.

Die Druckschrift DE 10 2006 008 245 A1 beschreibt einen organischen Lumineszenzstoff, der mit einer Hülle versehen ist, die den Lumineszenzstoff vor chemischen Einflüssen schützt und die Lichtechtheit erhöht. Im Gegensatz zur vorliegenden Erfindung wird der organische Lumineszenzstoff direkt mit einer organischen oder anorganischen Hülle beschichtet. Dieses Vorgehen hat mehrere technische Nachteile. Einerseits ist es nicht möglich, für unterschiedliche Leuchtstoffe ein einheitliches Beschichtungsverfahren bereitzustellen, d.h. das Beschichtungsverfahren an sich ist technisch deutlich aufwändiger. Andererseits sinkt z.B. die relative Leuchteffizienz von organischen Lumineszenzfarbstoffen, wenn diese direkt als Kernmaterial eingesetzt werden.

Die WO 2008/141972 A1 beschreibt Kern-Hülle-Teilchen, bei denen ein Brechungsindexunterschied des Kernmaterials und des Hüllmaterials mindestens 0,001 beträgt, wobei mindestens ein Breitspektrumabsorberkontrastmittel und/oder mindestens ein Vorläufermaterial eines Breitspektrumabsorberkontrastmittels im Kern-Hülle-Teilchen eingehüllt ist.

Die US 5 082 757 A beschreibt eine verkapselte Tonerzusammensetzung umfassend einen Kern, der ein polymeres Bindemittel, Pigment, Farbstoff oder ein Gemisch hiervon umfasst, und eine Mikrokapselhülle mit hydroxyliertem Polyurethan, das aus der Polykondensation eines Polyisocyanats und eines wasserlöslichen Kohlenhydrats abgeleitet ist.

Die DE 10 2004 063217 A1 beschreibt ein Sicherheitsmerkmal für Sicherheitspapiere, Wertdokumente und dergleichen, mit einem säurelabilen Merkmalsstoff als Kern und einer im Wesentlichen aus Metalloxid bestehenden Hülle, wobei das Sicherheitsmerkmal eine gegenüber dem säurelabilen Merkmalsstoff erhöhte Stabilität gegen die Einwirkung von Säuren aufweist.

Die DE 10 2012 013244 A1 beschreibt ein Wertdokument mit lumineszierenden, partikulären Agglomeraten, die jeweils mindestens zwei unterschiedliche, mit einer ersten bzw. einer zweiten Emissionswellenlänge emittierende, lumineszierende, feste homogene Phasen beinhalten, wobei bei einer Auswertung von Messwerten, die durch eine an verschiedenen Orten durchgeführte, ortspezifische Messung der ersten Lumineszenzintensität bei der ersten Emissionswellenlänge und der zweiten Lumineszenzintensität bei der zweiten Emissionswellenlänge erhältlich sind, eine statistische Korrelation zwischen den ersten Lumineszenzintensitäten und den zweiten Lumineszenzintensitäten vorliegt.

Der vorliegenden Erfindung liegt die Aufgabe zugrunde, ein gegenüber dem Stand der Technik verbessertes Sicherheitspigment bereitzustellen. Des Weiteren liegt der vorliegenden Erfindung die Aufgabe zugrunde, eine gegenüber dem Stand der Technik verbesserte Methode zur Herstellung eines Sicherheitpigments bereitzustellen.

Diese Aufgaben werden durch die in den unabhängigen Ansprüchen definierten Merkmalskombinationen gelöst. Weiterbildungen der Erfindung sind Gegenstand der Unteransprüche.

### Ausführliche Beschreibung der Erfindung

Die Erfindung beinhaltet eine vorteilhafte Weiterentwicklung der aus der Druckschrift US 5795379 A bekannten Methode der Einbringung lumineszierender Farbstoffe in ein festes Harz. Das erfindungsgemäße Verfahren beinhaltet einen weiteren Veredelungsschritt, um die das Lumineszenzpigment bzw. Sicherheitspigment enthaltende Druckfarbe (bzw. das Wertdokument) durch Erhöhung der Lösemittelstabilität der Kern-Hülle-Teilchen gegen die sonst typische Migration bzw. das sogenannte "Ausbluten" zu schützen. In diesem Schritt wird um das vernetzte (z.B. einen oder mehrere Merkmalsstoffe, z.B. Lumineszenzfarbstoffe enthaltende und auf die gewünschte Korngröße vermahlene) Harz eine Schutzhülle aus einem vernetzten Kondensationspolymer aufgebracht.

Während Isocyanat-basierte Additionspolymere wie z.B. Polyurethane oder Polyharnstoffe in einer Reaktionsextrusion ohne spezielle trockene Reaktionsbedingungen (Schutzgas, Vakuum, chemische Zusätze, etc.) immer eine gewisse Porosität aufweisen (siehe die US 3755222), läuft die Kondensation von Melamin-Formaldeyhdharzen ("MF-Harze") oder anderen Polykondensationspolymeren ohne gasinduzierte Porenbildung ab, da keines der Monomere durch Kontakt mit Wasser Kohlendioxid freisetzt.

Gegenstand der vorliegenden Erfindung ist u.a., die Vorteile der einfachen und gut skalierbaren Produktion von Polyadditionsharz-basierten, insbesondere Isocyanat-basierten Sicherheitspigmenten mit den chemikalienbeständigen Eigenschaften von Melamin-Formaldehydharzen zu kombinieren, indem auf einen mit Merkmalstoff beladenen Polyadditionsharz-Kern eine Schutzhülle aus Melamin-Formaldehyd aufkondensiert wird.

Dieser Prozessschritt ermöglicht es, lösliche oder instabile Merkmalsstoffe gegen äußere Einflüsse, wie Säure- oder Basekontakt, Kontakt mit organischen Lösemitteln, extreme klimatische Bedingungen oder Kontakt mit reduzierenden oder oxidierenden Substanzen, zu schützen.

Gemäß einer bevorzugten Ausführung wird in einem ersten Schritt der zu schützende Merkmalsstoff gemäß der Druckschrift US 5795379 A in eine Duromermatrix aus einem Isocyanat-basierten Polyadditionsharz eingebracht. Hierfür können die Merkmalsstoffe gemeinsam mit den Rohstoffen des verwendeten Harz-Typs (zum Beispiel Polyurethanharz oder Polyharnstoffharz) extrudiert oder verknetet werden. Die bevorzugte Konzentration der Merkmalsstoffe in der Mischung liegt in einem Bereich von 0,1% bis 25%, insbesondere bevorzugt in einem Bereich von 3% bis 20% (Gewichtsprozent). Nach Beendigung des Extrusions- oder Knetprozesses werden die erhaltenen, die Merkmalsstoffe enthaltenden Harze zu Harzpulver vermahlen, wobei die Korngröße gemäß der gewünschten Druckanwendung gewählt wird.

Gemäß einer bevorzugten Ausführung wird für die Erzeugung der mit Merkmalsstoff versetzten Kern-Polymerpartikel eine Mischung aus einem trimeren Isocyanatmonomer, bevorzugt dem Isocyanurat-Trimer von Isophorondiisocyanat, und verschiedenen Mono-, Di- oder Triaminen verwendet.

In einer weiteren bevorzugten Ausführungsform wird eine Mischung aus einem trimeren Isocyanatmonomer, bevorzugt dem Isocyanurat-Trimer von Isophorondiisocyanat, und verschiedenen Mono-, Di- oder Trialkoholen verwendet.

Auch Mischungen aus Mono-, Di- oder Triaminen und Mono-, Di- oder Trialkoholen sind möglich.

Die Mischung wird in einem Industriekneter auf 150°C bis 250°C, bevorzugt 180°C, erhitzt und dabei bis zum Erhärten geknetet.

Gemäß einer weiteren bevorzugten Ausführungsform wird die Mischung mit einem ansteigenden Temperaturprofil in einem Doppelschneckenextruder bei Temperaturen in einem Bereich von 5°C bis 250°C extrudiert. Alternativ können als Kernmaterial beliebige andere dreidimensional vernetzte Isocyanat-basierte Duromere verwendet werden, insbesondere andere Polyurethan-Harze oder andere Polyharnstoff-Harze.

Nach Beendigung des Extrusionsprozesses oder Knetprozesses werden die erhaltenen, die Merkmalsstoffe enthaltenden spröden Harzpulver auf die der gewünschten Anwendung entsprechende Korngröße zermahlen. Zum Beispiel besitzen Pigmente für den Einsatz in Offsetdruckanwendungen bevorzugt eine Korngröße (d99) < 12µm. Für den Einsatz in Siebdruckanwendungen besitzen die Pigmente bevorzugt eine Korngröße (d99) < 25 µm. Für den Einsatz in Stahlstichtiefdruck-Anwendungen besitzen die Pigmente bevorzugt eine Korngröße (d99) < 6 µm. Dabei muss beachtet werden, dass die Korngrößen durch Anbringung der zusätzlichen Schutzhülle wieder ansteigen können. Bevorzugt werden die Harzpartikel daher auf eine Korngröße (d99) < 10µm, insbesondere bevorzugt (d99) < 5µm, vermahlen.

Aus diesem ersten kostengünstigen und gut skalierbaren Extrusions- bzw. Verknetungsschritt erhält man ein verdruckbares Pulver in der passenden Korngröße. Diese Pigmente besitzen jedoch noch eine poröse bzw. zugängliche Oberfläche, welche den enthaltenen organischen Lumineszenzfarbstoff gegenüber äußeren Einflüssen wie Säure- oder Basekontakt, Kontakt mit organischen Lösemitteln, extreme klimatische Bedingungen (wie zum Beispiel warme, feuchte Luft) oder Kontakt mit reduzierenden oder oxidierenden Substanzen angreifbar macht. Die poröse Oberfläche ist das zwangsläufige Resultat aus der Reaktion von Wasser aus der Luft mit den Isocyanatgruppen der Monomere unter den Bedingungen der erwünschten Polyadditionsreaktion (Wärme), bei welcher u.a. gasförmiges Kohlendioxid entsteht.

Gegenstand der Erfindung ist u.a. die Einführung eines zusätzlichen Beschichtungsschrittes, welcher diesen Nachteil behebt. In diesem zweiten Schritt werden die im ersten Schritt erhaltenen Polyurethanpigmente oder Polyharnstoffpigmente mit einer schützenden Polymerschicht umhüllt. Bei der schützenden Polymerschicht handelt es sich um ein Polykondensationspolymer, nämlich ein Melamin-Formaldehyd-Harz.

Weiter bevorzugt enthält das Polykondensationspolymer der Hülle mindestens ein gleiches Monomer wie das Polyadditionspolymer des Kernmaterials, um ein direktes Aufwachsen der Hüllschicht auf das Kernmaterial zu begünstigen. Insbesondere bevorzugt handelt es sich bei diesem Monomer um Melamin. Die hohe Funktionalität (drei vernetzende Gruppen pro Molekül) von Melamin begünstigt ein gutes Aufwachsen und dichtes Abschließen der Hüllschicht. Gemäß einer bevorzugten Ausführungsform werden die zu beschichtenden Partikel in einer Konzentration in einem Bereich von 1g/l bis 250g/l, bevorzugt 5g/l bis 50 g/l und ein Kondensations-Präpolymer, nämlich ein Melamin-Formaldehyd-Präpolymer in einer Menge des 0,1-fachen bis 10-fachen, bevorzugt 1-fachen bis 3-fachen der Masse der zu beschichtenden Partikel mit einem Homogenisator bei Temperaturen in einem Bereich von 10°C-100°C, bevorzugt 60°C bis 80°C bei einem pH-Wert in einem Bereich von 1 bis 6,5, bevorzugt 3,5 bis 5,5 gerührt und dadurch mit einer Schutzhülle ummantelt. Diese Reaktion dauert typischerweise 1- 4 Stunden. Wählt man den pH-Wert zu niedrig, begünstigt man die Bildung von Kondensationskeimen in der Reaktionslösung, welche im Anschluss die Bildung von Kondensationspolymerpartikeln neben den zu beschichtenden Sicherheitspigmenten begünstigen. Wählt man den pH-Wert zu hoch, wird die Kondensationsreaktion unnötig verlangsamt, da die Reaktivität des Melamins gegenüber Formaldehyd im basischen Medium stark abnimmt (siehe D. Braun, W. Krausse, Angew. Makromol. Chem. 118 (1983) 165).

Für die Prozedur der Beschichtung ist es unerheblich, welcher Merkmalsstoff in das Polyadditionspolymer des Kernmaterials eingearbeitet wurde, da die bestimmenden Oberflächeneigenschaften (z.B. Ladung, chemische Bindungsstellen etc.) maßgeblich durch das Additionspolymer der Duromer-Matrix bestimmt werden. Somit wird hierin eine universelle Methode zur Verkapselung von Merkmalsstoffen beschrieben.

Das Sicherheitspigment enthält einen optischen Merkmalsstoff, der im Infrarot- (IR-), sichtbaren (VIS-) und/oder ultravioletten (UV-) Spektralbereich aktiv ist. Der Merkmalsstoff kann absorbierend oder lumineszierend wirken. Dabei handelt es sich z.B. um einen organischen oder anorganischen Lumineszenz- oder Absorberfarbstoff, photochromen oder thermochromen Stoff.

Gemäß einer bevorzugten Ausführungsform handelt es sich bei dem Merkmalsstoff um einen Lumineszenzfarbstoff. Gemäß einer bevorzugten Ausführungsform handelt es sich bei dem Lumineszenzfarbstoff um einen Fluoreszenzfarbstoff. Gemäß einer weiteren bevorzugten Ausführungsform handelt es sich bei dem Lumineszenzfarbstoff um einen Phosphoreszenzfarbstoff. Gemäß einer weiteren bevorzugten Ausführungsform handelt es sich bei dem Lumineszenzfarbstoff um einen im UV-Bereich anregbaren Lumineszenzfarbstoff, welcher im sichtbaren Spektralbereich emittiert. Gemäß einer weiteren bevorzugten Ausführungsform handelt es sich um einen im sichtbaren Spektralbereich anregbaren Lumineszenzfarbstoff, welcher im sichtbaren Spektralbereich emittiert. Gemäß einer weiteren bevorzugten Ausführungsform handelt es sich um einen im Infrarot-Bereich emittierenden Lumineszenzfarbstoff. Bei den Farbstoffen kann es sich sowohl um rein organische Moleküle, als auch um metallorganische Komplexe handeln.

Gemäß einer bevorzugten Ausführungsform werden zwei oder mehr fluoreszierende oder phosphoreszierende Lumineszenzfarbstoffe gemischt, um ein Energietransfersystem bzw. FRET-System zu erstellen, in welchem der erste Lumineszenzfarbstoff nach Anregung seine Anregungsenergie partiell oder vollständig an den zweiten Lumineszenzfarbstoff abgeben kann. Im Falle eines derartigen FRET-Systems ist einer der beteiligten Lumineszenzfarbstoffe bevorzugt im UV-Bereich anregbar und emittiert im sichtbaren Spektralbereich, während der andere Lumineszenzfarbstoff im sichtbaren Spektralbereich anregbar ist und im sichtbaren Spektralbereich emittiert.

Beispiele für Stoffklassen von UV-anregbaren bzw. im sichtbaren Spektralbereich anregbaren Lumineszenzfarbstoffen, welche im sichtbaren Spektralbereich emittieren, sind rein organische Lumineszenzfarbstoffe und lumineszierende Metallkomplexe. Mögliche Farbstoffklassen sind zum Beispiel Diarylpolyene, Diarylethene, Arylacetylene, Oxazole, Pyrazole, Benzazole, Anthrone, Chinone, Cyanine, Rhodamine, Oxazine, Phenoxazine, Thiazine, Phenothiazine, Perylene, Terylene, Coumarine, Benzoxazinone oder Benzothiazinone sowie Seltenerdmetallkomplexe, wie z.B. β-Diketonat-Seltenerdmetallkomplexe oder Dipicolinat-Seltenerdmetallkomplexe, dabei bevorzugt neutral geladene Seltenerdmetallkomplexe. Andere organische Lumineszenzfarbstoffklassen sind ebenfalls einsetzbar.

Insbesondere werden als Farbstoffklasse für im sichtbaren Spektralbereich anregbare Lumineszenzfarbstoffe welche im Sichtbaren emittieren aufgrund ihrer hohen Lichtstabilität bevorzugt Perylenfarbstoffe eingesetzt.

Beispiele für geeignete im Infrarot emittierende Lumineszenzfarbstoffe sind organische Fluoreszenzfarbstoffe oder lumineszierende Metallkomplexe wie IR-1048, Cy7 oder Nd(TTA)₃ (Neodym-tris-thenoyltrifluoroacetonat).

Beispiele für FRET-Systeme sind z.B. Mischungen aus einem grün-gelb anregbaren Fluoreszenzfarbstoff und einem grün-gelb emittierenden Fluoreszenzfarbstoff, beispielsweise eine Mischung mit einem Gewichtsverhältnis von 1:15 aus 2,9-Bis(2,6-diisopropylphenyl)anthra[2,1,9-def:6,5,10-d'e'f']diisochinolin-1,3,8,10(2H,9H)-tetraon (C₄₈H₄₂N₂O₄, ein grün anregbarer Perylenfarbstoff welcher eine orange Lumineszenzemission besitzt, im weiteren "F-Orange" genannt) und N-(2-(4-oxo-4H-benzo [d] [1,3] oxazin-2-yl)phenyl)naphthalen-2-sulfonamid (C₂₄H₁₆N₂O₄S, ein UV-anregbarer Lumineszenzfarbstoff welcher eine grüne Lumineszenzemission besitzt, im weiteren "F-Grün" genannt).

Ein FRET-System kann auch dazu dienen, eine forensische Komponente in einem Lumineszenzpigment auszulesen. So kann der Akzeptor-Farbstoff nicht nur durch einen Energietransfer des Donorfarbstoffes angeregt werden, sondern auch eine direkte Anregung des Akzeptorfarbstoffes kann zu dessen Lumineszenz führen. Beispielsweise kann eine Mischung aus F-Orange und F-Grün einerseits im UV-A-Bereich, z.B. bei 365 nm, angeregt werden (Anregung des F-Grün gefolgt von Energieübertrag auf F-Orange). Andererseits kann für einen forensischen Test auch das F-Orange direkt angeregt werden, beispielsweise durch Licht der Wellenlänge 525 nm. Die direkte Anregung des Akzeptorstoffes kann somit verwendet werden, um FRET-Systeme von anderen Farbstoffsystemen zu unterscheiden, und bietet eine zusätzliche Sicherheitsstufe, die z.B. in einem Labor oder automatisch von Sensoren ausgewertet werden kann.

Gemäß einer bevorzugten Ausführungsform enthält das Lumineszenzpigment daher ein Energietransfersystem (FRET-System), bevorzugt ein FRET-System aus einem UV-anregbaren Lumineszenzfarbstoff als Donor und einem im sichtbaren Bereich anregbaren Lumineszenzfarbstoff als Akzeptor. Bevorzugt handelt es sich bei dem Akzeptor um einen Perylenfarbstoff. Bevorzugt wird der Akzeptor als forensischer Marker verwendet.

Als lumineszierende Merkmalsstoffe eignen sich vor allem organische oder metallorganische Moleküle, aber auch Quanten-Dots und anorganische Pigmente können über dieses Verfahren geschützt werden.

Gemäß einer bevorzugten Ausführungsform handelt es sich bei dem Merkmalsstoff um einen anorganischen Lumineszenzstoff.

Gemäß einer bevorzugten Ausführungsform handelt es sich bei dem Merkmalsstoff um einen Absorberfarbstoff für unsichtbare Strahlung, z.B. einen Infrarot-Absorber oder UV-Absorber.

Als absorbierende Merkmalsstoffe eignen sich vor allem organische oder metallorganische Moleküle, aber auch Quanten-Dots und anorganische Pigmente können über dieses Verfahren geschützt werden.

Gemäß einer bevorzugten Ausführungsform handelt es sich bei dem Merkmalsstoff um einen anorganischen Absorberstoff.

Bevorzugt handelt es sich bei dem Merkmalsstoff um einen Infrarotabsorber.

Besonders bevorzugt weist der Infrarotabsorber im sichtbaren Spektralbereich keine oder nur eine geringe Absorption auf. Gemäß einer bevorzugten Ausführungsform sind die Absorber schmalbandig (z.B. mit einem FWHM (Halbwertsbreite, "full width at half maximum") von weniger als 200 nm) oder scharfbandig (z.B. mit einem FWHM von weniger als 30 nm) und absorbieren damit in einem engen Spektralbereich. Gemäß einer weiteren bevorzugten Ausführungsform absorbieren die Absorber breitbandig (z.B. mit einem FWHM von mehr als 200 nm). Gemäß einer bevorzugten Ausführungsform liegt das Absorptionsmaximum des Infrarotabsorbers im Bereich von 700 nm bis 900 nm, bevorzugt in einem Bereich von 700 nm bis 800 nm, und ist damit geeignet, um über Standard-Infrarotsensoren für Banknoten ausgelesen zu werden. Gemäß einer weiteren bevorzugten Ausführungsform liegt das Absorptionsmaximum des Infrarotabsorbers oberhalb von 900 nm, weiter bevorzugt oberhalb von 950 nm, insbesondere bevorzugt im Bereich von 1000 nm bis 1100 nm, und wird dadurch von Standard-Infrarotsensoren für Banknoten nicht erfasst, kann jedoch durch spezielle Infrarotsensoren für Banknoten erfasst werden.

Gemäß einer bevorzugten Ausführungsform liegt das Absorptionsmaximum oder eine starke Absorptionsbande des UV-Absorbers im UV-A-Bereich von 315 nm bis 380 nm, insbesondere bevorzugt im Bereich von 350 nm bis 380 nm. Gemäß einer weiteren bevorzugten Ausführungsform liegt das Absorptionsmaximum oder eine starke Absorptionsbande des UV-Absorbers im UV-B/C-Bereich von 200 nm bis 315 nm, weiter bevorzugt von 220 nm bis 290 nm, insbesondere bevorzugt von 240 nm bis 270 nm.

Geeignete Infrarotabsorber sind beispielsweise kommerziell bei der Firma Fujifilm Imaging Colorants (z.B. CKK-55), der Firma BASF (z.B. Lumogen IR-Absorber) oder der Firma Epolin unter dem Markennamen Epolight erhältlich. Beispielsweise absorbiert Epolight 4101 schmalbandig bei 739 nm und zeigt bei verdünnter Einbringung in ein Polymer keine merkliche Eigenfarbe. Ebenso absorbiert beispielsweise Epolight 4831 schmalbandig bei 1000 nm und zeigt bei verdünnter Einbringung in ein Polymer keine merkliche Eigenfarbe.

Geeignete UV-Absorber sind beispielsweise bei der Firma BASF unter den Markennamen Tinuvin und Chimassorb erhältlich. Beispielsweise besitzt Tinuvin 326 eine starke Absorptionsbande bei 360 nm und Chimassorb 81 eine starke Absorptionsbande bei 330 nm.

Gemäß einer bevorzugten Ausführungsform handelt es sich bei dem Merkmalsstoff um einen schaltbaren Farbstoff. Bevorzugt handelt es sich um einen thermochromen oder photochromen Farbstoff. Gemäß einer bevorzugten Ausführungsform handelt es sich bei dem schaltbaren Farbstoff um eine photochrome Verbindung. Bevorzugt handelt es sich um eine photochrome Verbindung, die zwischen einem ersten sichtbaren Zustand und einem zweiten sichtbaren oder unsichtbaren Zustand schaltbar ist.

Bevorzugt wird der Schaltvorgang in eine Richtung durch Bestrahlung mit UV-Licht durchgeführt, während das Rückschalten entweder von alleine (thermisch) oder durch Bestrahlung mit sichtbarem Licht erfolgt.

Gemäß einer bevorzugten Ausführungsform sind die photochromen Farbstoffe ebenfalls Lumineszenzfarbstoffe. Dabei können beide oder nur einer der Schaltungszustände des Farbstoffs zur Lumineszenz fähig sein. Die verschiedenen Schaltungszustände können identische Lumineszenzeigenschaften besitzen (z.B. Emission bei der gleichen Wellenlänge) oder verschiedene Lumineszenzeigenschaften besitzen (z.B. Wechsel der Emissionswellenlänge nach Schaltvorgang).

Gemäß einer bevorzugten Ausführungsform befindet sich die durch den Schaltvorgang erzeugte Absorptionsbande oder Emissionsbande, insbesondere die erzeugte Absorptionsbande, im sichtbaren Spektralbereich. Gemäß einer weiteren bevorzugten Ausführungsform befindet sich die durch den Schaltvorgang erzeugte Absorptionsbande oder Emissionsbande im Infrarotbereich, z.B. in einem Bereich von 700 nm bis 900 nm.

Beispiele für geeignete thermochrome Farbstoffe sind beispielsweise (a) organische Moleküle, welche bei Wechsel der Temperatur durch Strukturänderung ihre Farbe ändern, wie 9,9'-Bixanthyliden und 10,10'-Bianthronyliden; (b) Kombinationen aus einem Leucofarbstoff (z.B. Spirolactone, Spiropyrane) und einem reversiblen Protonendonor (z.B. Bisphenol A, 1,2,3-Triazole) und einem Phasenwechselmaterial (z.B. Paraffin), welche bei Wechsel der Temperatur durch Protonierung/Deprotonierung des Leucofarbstoffs die Farbe wechseln; (c) Farbstoffe oder Metallkomplexe, welche ihre Farbintensität temperaturabhängig verändern, z.B. Temperatur-Quenching bei Europiumkomplexen; und (d) Kombinationen aus mehreren Farbstoffen mit unterschiedlichem Temperaturverhalten (z.B. einer Mischung aus Terbium- und Europiumkomplexen, wie sie u.a. in der Schrift EP 0256922 B1 beschrieben wird, welche temperaturabhängig rot oder grün lumineszieren kann).

Hierbei sind (a) und (d) aufgrund des klaren Farbwechsels bevorzugt und (b) aufgrund der Komplexität und schwierigen Umsetzung weniger bevorzugt.

Beispiele für geeignete photochrome Farbstoffe sind beispielsweise Spiropyrane, Stilbene/Azastilbene, Triarylmethane, Nitrone, Fulgide, Naphthopyrane, Spirooxazine, Quinone und Diarylethene. Aufgrund ihrer hohen Lichtstabilität sind Diarylethene bevorzugt. Beispielsweise absorbiert das Diarylethen BTF6 (=1,2-bis(2-methyl-1-benzothiophen-3-yl)perfluorocyclopenten) in der offenen Ringstruktur im UV-Bereich bei 200 nm bis 300 nm und besitzt keine merklichen Absortionsbanden im sichtbaren Spektralbereich, ist also farblos. Nach Bestrahlung mit UV-Licht der Wellenlänge 254 nm wandelt es sich jedoch in die geschlossene Ringstruktur um, welche eine Absorptionsbande im sichtbaren Spektralbereich bei 530 nm aufweist, also farbig ist. Bei Anregung mit UV-Licht der Wellenlänge 315 nm emittieren sowohl die geschlossene, als auch die offene Ringstruktur bei 450 nm, es handelt sich also gleichzeitig um einen Lumineszenzfarbstoff.

Durch Abwarten (thermisch) oder Bestrahlung mit sichtbarem Licht, z.B. Licht der Wellenlänge 400 nm, lässt sich die geschlossene Ringstruktur wieder in die offene Ringstruktur zurückführen.

Weiterhin ist es möglich, durch gezielte Kombination (bzw. gemeinsame Verkapselung) unterschiedlicher Merkmalstoffe komplexere Codierungen zu erzeugen und Merkmalspartikel zu erzeugen, die für unterschiedliche maschinenlesbare Nachweisverfahren gleichzeitig geeignet sind.

Zusätzlich zu dem Merkmalsstoff können dem Kernmaterial oder Hüllmaterial, bevorzugt dem Kernmaterial, weitere Additive zugesetzt werden.

Gemäß einer bevorzugten Ausführungsform werden dem Kernmaterial UV-Absorber zugesetzt. Hierdurch kann z.B. Lichtechtheit des Merkmalstoffes verbessert werden.

Geeignete UV-Absorber sind beispielsweise bei der Firma BASF unter dem Markennamen Tinuvin und Chimassorb erhältlich, beispielsweise Chimassorb 81.

Gemäß einer weiteren bevorzugten Ausführungsform werden dem Kernmaterial Farbstoffe zugefügt. Hierdurch kann z.B. die Eigenfärbung der Pigmente angepasst werden (z.B. rot oder blau). Ebenso können Farbstoffe verwendet werden, um Anregungs- oder Emissionsspektren der Merkmalstoffe zu modulieren.

Weiterhin wird mit dem Kern-Hülle-Aufbau erreicht, dass die Chemikalienstabilität der Sicherheitspigmente unabhängig von der Chemikalienstabilität der gewählten Merkmalsstoffe ist. Führt man einen qualitativen Stabilitätstest von Druckmustern aus, wird für sichtbare Effekte wie z.B. Lumineszenzpigmente oft eine Einteilung in die folgenden Stufen durchgeführt:
4: keine sichtbare Änderung
3: geringfügige Änderung
2: deutliche Änderung, weniger als 50% beschädigt
1: starke Änderung, mehr als 50% beschädigt
0: Element zerstört

Qualitativ erfolgt die Bewertung der Stabilität anhand der oben genannten Stufen 0-4 im Fall von im VIS absorbierenden oder lumineszierenden Merkmalstoffen durch Betrachtung des (angeregten) Andrucks mit dem Auge.

Quantitativ erfolgt die Bewertung durch maschinelle Vermessung, z.B. im Falle von Lumineszenz-basierten Merkmalsstoffen durch Vermessung des Emissionsspektrums mit Hilfe eines Fluoreszenzspektrometers oder im Falle von Absorptions-basierten Merkmalsstoffen durch Vermessung des Absorptionsspektrums mit Hilfe eines UV/VIS/NIR-Spektrometers.

Erfahrungsgemäß besitzen lumineszierende Andrucke mit der Stufe 4 ("keine sichtbare Änderung") eine nach dem Test verbleibende Lumineszenzintensität von über 80% bezogen auf die ursprüngliche Lumineszenzintensität. Analog wird für andere Merkmalsstoffe ebenfalls eine verbleibende Signalintensität von Emission bzw. Absorption von über 80% bezogen auf die ursprüngliche Signalintensität als äquivalent zu "Stufe 4" angesehen. Dies wird im Folgenden auch als eine Stabilität von über 80% bezeichnet.

Um die Stabilität der Sicherheitspigmente qualitativ und quantitativ beurteilen zu können, wird im Folgenden ein applikationsnahes Testverfahren beschrieben.

Testverfahren A5 bzw. A30:
- Einbringen der Sicherheitspigmente in einen Offset-Lack mit einer Pigmentierung von 15 Gewichtsprozent mit einem Dreiwalzenstuhl
- Andrucken der so erhaltenen Druckfarbe im Offsetdruck mit einem Andruckgewicht von 2 g/m² auf Werttitelpapier ("Banknotenpapier")
- Trocknen des Andrucks bei 60°C für 12h
- Eintauchen des Andrucks (bzw. eines abgeschnittenen Teils des Andrucks) in die jeweilige Testsubstanz, gegen welche die Stabilität des Andrucks ermittelt werden soll für einen Zeitraum von 5 Minuten (A5) bzw. 30 Minuten (A30)
- Entfernen des Andrucks aus der Testsubstanz und Abwaschen von anhaftender Testsubstanz mit Wasser
- Trocknen des Andrucks bei 60°C für 2h
- Die quantitative Stabilität des Andrucks gegen die Testsubstanz ergibt sich aus dem Vergleich der Signalintensität des Andrucks vor und nach Behandlung mit der Testsubstanz (bzw. dem Vergleich eines unbehandelten Teils des Andrucks mit einem behandelten Teil des gleichen Andrucks); Stabilität = (Intensität nach Behandlung mit Lösemittel) / (Intensität vor Behandlung mit Lösemittel)

Die Sicherheitspigmente auf Basis von Kern-Hülle-Teilchen der vorliegenden Erfindung erreichen in Andrucken dabei für applikationsrelevante Lösemittel, Säuren und Basen die höchste Stufe 4 oder eine Stabilität >80%, selbst wenn Andrucke des gleichen ungeschützten Merkmalstoffs nur die unterste Stufe 0 erreichen.

Gemäß einer bevorzugten Ausführungsform liegt die höchste Stabilitätsstufe "keine sichtbare Änderung" oder eine Stabilität >80%, bevorzugt >90% bei den folgenden applikationsrelevanten Lösungsmitteltests gemäß Testverfahren A5, besonders bevorzugt gemäß Testverfahren A30 vor:
Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor).

Dabei beträgt die Einwirkungsdauer 5 bzw. bevorzugt 30 Minuten, um sicherzustellen, dass ein ausreichender langer Kontakt zwischen Sicherheitspigment und Testsubstanz zu Stande kommt.

Gemäß einer weiteren bevorzugten Ausführungsform werden die genannten Stabilitäten ebenfalls für folgende applikationsrelevante Lösungsmittel erfüllt:
- Ethanol
- Trichlorethylen
- Tetrachlorethylen
- Xylol
- Leichtbenzin
- Natriumsulfit-Lösung (10 Gewichtsprozent)
- Schwefelsäure (2 Gewichtsprozent)
- Ammoniaklösung (10 Gewichtsprozent)

Gemäß einer bevorzugten Ausführungsform sind die Sicherheitspigmente selbst gegen besonders aggressive chemische Lösungsmittel für mindestens 5 Minuten stabil, z.B. Aceton. Insbesondere ist Aceton in der Lage, die meisten organischen Merkmalsstoffe des Stands der Technik anzugreifen.

Generell ist zu beachten, dass der für den Test verwendete Drucklack bzw. das Substrat auf dem aufgedruckt wird selbst im Test stabil sein muss, dies ist für die im Sicherheitsdruck von Wertdokumenten verwendeten Lacke und Substrate generell erfüllt. Die Stabilität des Drucklacks/Substrats lässt sich beispielsweise mit inerten Lumineszenzstoffen (z.B. anorganischen Phosphoren) oder inerten Absorberstoffen (z.B. anorganischen Farbpigmenten) prüfen.

Die Sicherheitspigmente werden bevorzugt für die Herstellung von Wertdokumenten verwendet. Dies geschieht bevorzugt in Form einer Druckfarbe, insbesondere für Offsetdruck, Siebdruck oder Stahlstichtiefdruck. Anstatt die Pigmente direkt in den Drucklack bzw. die Druckfarbe einzuarbeiten kann aus den Pigmenten auch zuerst ein Farbkonzentrat hergestellt werden. Diese hat z.B. einem Pigmentanteil von 50% und kann später in den Drucklack bzw. die Druckfarbe eingearbeitet werden. Dies hat anwendungstechnische Vorteile wie z.B. eine schnellere Einarbeitung oder das Vermeiden von Stauben bei der Einarbeitung.

Alternativ können die Sicherheitspigmente auch in eine Polymermasse eingearbeitet werden, bevorzugt um ein Masterbatch zu erzeugen, oder ein Wertdokument-Substrat, eine Sicherheitsfolie, eine Melierfaser oder einen Sicherheitsfaden herzustellen. Dies kann beispielsweise durch Extrusion erfolgen.

Die Erfindung wird nachstehend anhand von Ausführungsbeispielen näher beschrieben.

### Beispiel 1: Grünes Lumineszenzpigment

In einem Laborkneter werden die Komponenten
82,57 g Isophorondiisocyanat
28,14 g Benzamid
25,71 g N-(2-(4-oxo-4H-benzo[d][1,3]oxazin-2-yl)phenyl)naphthalen-2-sulfonamid (C₂₄H₁₆N₂O₄S)
bei 140°C für 30 min geknetet. Anschließend werden 23,10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen.

Von diesem Pulver werden 100 g in 1,3 1 Wasser gegeben und mit einem Homogenisator dispergiert. Zu dieser Mischung werden 900 ml einer 20%igen wässrigen Lösung aus Hexahydroxymethylmelamin gegeben und mit 8 ml konzentrierter Essigsäure versetzt. Die erhaltene Reaktionsmischung wird für 2 h bei 70 °C erhitzt. Das erhaltene beschichtete Pigment wird abzentrifugiert und mit 3 1 Wasser gewaschen. Nach einem letzten Zentrifugationsschritt wird das Pigment bei 60°C in einem Trockenschrank getrocknet.

Es werden ca. 175 g eines bei Bestrahlung mit UV-Licht der Wellenlänge 365 nm grün fluoreszierenden Pigments erhalten.

Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt.

Im Andruck zeigt das Pigment eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Beispiel 2: Blaues Lumineszenzpigment

In einem Laborkneter werden die Komponenten
82,57 g Isophorondiisocyanat
40,02 g p-Toluolsulfonamid
8,57 g 4,4'-Bis(benzoxazol-2-yl)stilben (C₂₈H₁₈N₂O₂)
bei 140°C für 30 min geknetet. Anschließend werden 23,10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen.

Von diesem Pulver werden 100 g in 1,3 1 Wasser gegeben und mit einem Homogenisator dispergiert. Zu dieser Mischung werden 900 ml einer 20%igen wässrigen Lösung aus Hexahydroxymethylmelamin gegeben und mit 8 ml konzentrierter Essigsäure versetzt. Die erhaltene Reaktionsmischung wird für 2 h bei 70 °C erhitzt. Das erhaltene beschichtete Pigment wird abzentrifugiert und mit 3 1 Wasser gewaschen. Nach einem letzten Zentrifugationsschritt wird das Pigment bei 60°C in einem Trockenschrank getrocknet.

Es werden ca. 160 g eines bei Bestrahlung mit UV-Licht der Wellenlänge 365 nm blau fluoreszierenden Pigments erhalten.

Das erhaltene Pigment wird mit einer Konzentration von 15% in einen Offsetlack (hubergroup Deutschland GmbH) mit einem Dreiwalzenstuhl eingebracht und mit einem Andruckgewicht von 2 g/m² im Offsetdruck angedruckt.

Im Andruck zeigt das Pigment eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Beispiel 3: Grünes Lumineszenzpigment (Vergleichsbeispiel)

In einem Laborkneter werden die Komponenten
82,57 g Isophorondiisocyanat
28,14 g Benzamid
25,71 g N-(2-(4-oxo-4H-benzo[d][1,3]oxazin-2-yl)phenyl)naphthalen-2-sulfonamid (C₂₄H₁₆N₂O₄S)
bei 140°C für 30 min geknetet. Anschließend werden 23,10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen.

Die erhaltenen Pigmente aus Beispiel 1 und Beispiel 3 (analog aufgebautes Vergleichsbeispiel ohne schützende Hülle) werden mit einem Dreiwalzenstuhl mit jeweils 15 Gewichtsprozent in einen Offsetlack (Sicpa Holding SA) eingebracht und es wird je ein Andruck mit 2 g/m² Andruckstärke erstellt.

Die Andrucke werden für 5 Minuten in Aceton eingelegt und die Fluoreszenzintensität bei 365 nm Anregungslicht vor und nach Behandlung mit dem Lösemittel bewertet. Dafür wird die Fluoreszenz des Andrucks unter einer definierten Messgeometrie an einem Fluoreszenzspektrometer (Perkin-Elmer LS50B) vermessen.

| | Intensität vor Aceton | Intensität nach Aceton (5 Minuten) |
|---|---|---|
| Beispiel 1 | 100 % | 99 % |
| Beispiel 3 | 100 % | 5% |

Weiterhin wird die Lösemittelstabilität nach Testverfahren A30 gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) durchgeführt. Sie liefert für das Sicherheitspigment aus Beispiel 1 durchgängig Intensitäten über 95%. Das Sicherheitspigment aus Vergleichsbeispiel 3 zeigt jedoch trotz Einbettung in eine stark vernetzte Duromer-Matrix wie sie dem derzeitigen Stand der Technik für Sicherheitspigmente entspricht z.B. noch eine gewisse Anfälligkeit gegenüber polaren Lösemitteln und wässrigen Basen, da es keine schützende zusätzliche MF-Umhüllung besitzt.

| | Intensität vor Ethylacetat | Intensität nach Ethylacetat (30 Minuten) |
|---|---|---|
| Beispiel 1 | 100 % | 100 % |
| Beispiel 3 | 100 % | 9% |

| | Intensität vor NaOH | Intensität nach NaOH 2% (30 Minuten) |
|---|---|---|
| Beispiel 1 | 100 % | 99 % |
| Beispiel 3 | 100 % | 70% |

### Beispiel 4: UV-Absorptionspigment mit blauer Eigenfarbe

In einem Laborkneter werden die Komponenten
79,63 g des Isocyanurat-Trimeren von Isophorondiisocyanat
31,72 g p-Toluolsulfonamid
2,00 g Harnstoff
23 g Sudanblau II (1,4-Bis-(butylamino)-antrachinon)
10 g 2-Hydroxy-4-(octyloxy)benzophenon (CH₃(CH₂)₇OC₆H₃(OH)COC₆H₅) bei 160°C für ca. 30 min geknetet. Anschließend werden 14,12 g Melamin zugegeben und die Mischung bis zum Erstarren weitergeknetet. Das erhaltene Pulver wird mit einer Luftstrahlmühle auf eine Korngröße (d99) von 3µm vermahlen.

Von diesem Pulver werden 50 g in 0,65 1 Wasser gegeben und mit einem Homogenisator dispergiert. Zu dieser Mischung werden 450 ml einer 20%igen wässrigen Lösung aus Hexahydroxymethylmelamin gegeben und mit 4 ml konzentrierter Essigsäure versetzt. Die erhaltene Reaktionsmischung wird für 2 h bei 70 °C erhitzt. Das erhaltene beschichtete Pigment wird abzentrifugiert und mit 21 Wasser gewaschen. Nach einem letzten Zentrifugationsschritt wird das Pigment bei 60°C in einem Trockenschrank getrocknet.

Es werden ca. 80 g eines blauen Pigments erhalten, welches zusätzlich eine Absorptionsbande im Bereich 280-350 nm besitzt.

Das erhaltene Pigment wird mit einer Konzentration von 15% in eine wasserbasierte Siebdruckfarbe (Pröll KG) mit einem Dreiwalzenstuhl eingebracht und mit einem Andruckgewicht von 6 g/m² im Siebdruck angedruckt.

Im Andruck zeigt das Pigment eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent ), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95% (sowohl für die UV-Absorption als auch die blaue Eigenfarbe).

### Beispiel 5: Infrarot-Absorptionspigment

In einem Laborkneter werden die Komponenten
79,63 g des Isocyanurat-Trimeren von Isophorondiisocyanat
22,2 g Benzamid
2,00 g Harnstoff
23 g IR-Absorber CKK-55 (Fujifilm Imaging Colorants)
bei 160°C für ca. 30 min geknetet. Anschließend werden 14,12 g Melamin zugegeben und die Mischung bis zum Erstarren weitergeknetet. Das erhaltene Pulver wird mit einer Luftstrahlmühle auf eine Korngröße (d99) von 3µm vermahlen.

Von diesem Pulver werden 50 g in 0,65 l Wasser gegeben und mit einem Homogenisator dispergiert. Zu dieser Mischung werden 450 ml einer 20%igen wässrigen Lösung aus Hexahydroxymethylmelamin gegeben und mit 4 ml konzentrierter Essigsäure versetzt. Die erhaltene Reaktionsmischung wird für 2 h bei 70 °C erhitzt. Das erhaltene beschichtete Pigment wird abzentrifugiert und mit 21 Wasser gewaschen. Nach einem letzten Zentrifugationsschritt wird das Pigment bei 60°C in einem Trockenschrank getrocknet.

Es werden ca. 80 g eines Infrarot-Absorberpigments erhalten, welches eine Absorptionsbande bei 850 nm aufweist.

Das erhaltene Pigment wird mit einer Konzentration von 15% in einen Offsetlack (hubergroup Deutschland GmbH) mit einem Dreiwalzenstuhl eingebracht und mit einem Andruckgewicht von 2 g/m2 im Offsetdruck angedruckt.

Im Andruck zeigt das Pigment eine hohe Stabilität gegen organische Lösemittel sowie wässrige Säuren und Basen (Änderung der Absorptionsbandenintensität bei 850 nm von weniger als 5%), während Andrucke des reinen Absorbers nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Beispiel 6: Photochromes Pigment

In einem Laborkneter werden die Komponenten
80,41 g Isophorondiisocyanat
27,11 g Benzamid
23,12 g Cis-1,2-dicyano-1,2-bis(2,4,5-trimethyl-3-thienyl)ethen (C₁₈H₁₈N₂S₂) bei 140°C für 30 min geknetet. Anschließend werden 23,10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen.

Von diesem Pulver werden 100 g in 1,3 1 Wasser gegeben und mit einem Homogenisator dispergiert. Zu dieser Mischung werden 900 ml einer 20%igen wässrigen Lösung aus Hexahydroxymethylmelamin gegeben und mit 8 ml konzentrierter Essigsäure versetzt. Die erhaltene Reaktionsmischung wird für 2 h bei 70 °C erhitzt. Das erhaltene beschichtete Pigment wird abzentrifugiert und mit 3 1 Wasser gewaschen. Nach einem letzten Zentrifugationsschritt wird das Pigment bei 60°C in einem Trockenschrank getrocknet.

Es werden ca. 175 g eines bei Bestrahlung mit UV-Licht der Wellenlänge 330 nm sich rot verfärbenden Pigments erhalten (die Rückfärbung erfolgt thermisch oder durch Bestrahlung mit sichtbarem Licht, z.B. der Wellenlänge 520 nm).

Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt.

Im Andruck zeigt das Pigment eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

## Patentansprüche

1. Sicherheitspigment, umfassend Kern-Hülle-Teilchen mit einem auf einem organischen Additionspolymer basierenden Kern, einer auf einem organischen Kondensationspolymer basierenden Hülle und einem im Kern in fein verteilter oder gelöster Form vorliegenden Merkmalsstoff, wobei das Additionspolymer ein dreidimensional vernetztes Duromer ist, das Kondensationspolymer der Hülle ein Melamin-Formaldehyd-Harz ist und der Merkmalstoff ein fluoreszierender oder phosphoreszierender oder photochromer oder thermochromer Merkmalstoff oder ein UV- oder IR- oder VIS-Absorptionsfarbstoff ist.

2. Sicherheitspigment nach Anspruch 1, wobei das Additionspolymer aus trimeren Isocyanatmonomeren gebildet wird.

3. Sicherheitspigment nach Anspruch 2, wobei das Additionspolymer aus Isocyanurat-Trimeren von Isophorondiisocyanat und Aminen gebildet wird.

4. Sicherheitspigment nach Anspruch 3, wobei die Amine aus Mono-, Di- und Triaminen ausgewählt werden.

5. Sicherheitspigment nach einem der Ansprüche 1 bis 4, wobei der Merkmalstoff ein organischer oder ein metallorganischer Stoff ist.

6. Sicherheitspigment nach einem der Ansprüche 1 bis 5, wobei der fluoreszierende oder phosphoreszierende Merkmalstoff im UV-Spektralbereich anregbar ist und im sichtbaren Spektralbereich emittiert.

7. Sicherheitspigment nach einem der Ansprüche 1 bis 5, wobei der fluoreszierende oder phosphoreszierende Merkmalstoff im IR-Spektralbereich emittiert.

8. Sicherheitspigment nach einem der Ansprüche 1 bis 7, wobei im Kern zwei unterschiedliche lumineszierende Farbstoffe in fein verteilter oder gelöster Form vorliegen, die ein Energietransfersystem bilden bei dem der erste lumineszierende Farbstoff nach Anregung seine Anregungsenergie partiell oder vollständig an den zweiten lumineszierenden Farbstoff transferiert.

9. Sicherheitspigment nach einem der Ansprüche 1 bis 8, wobei das Kondensationspolymer der Hülle und das Additionspolymer des Kerns mindestens ein gleiches Monomer als Polymerbestandteil beinhalten.

10. Sicherheitspigment nach einem der Ansprüche 1 bis 9, wobei gleichzeitig das Additionspolymer des Kerns Melamin als Monomer enthält.

11. Sicherheitspigment nach einem der Ansprüche 1 bis 10, wobei der Masseanteil der Hülle mehr als 10% bezogen auf die Masse des Kerns beträgt.

12. Verfahren zum Herstellen eines Sicherheitspigments nach einem der Ansprüche 1 bis 11, aufweisend
a) den Schritt des Bereitstellens eines auf einem Additionspolymer basierenden Partikels mit einem darin gelösten oder fein verteilt vorliegenden Merkmalsstoff; und
b) den Schritt des Umhüllens des im Schritt a) erhaltenen Partikels mit einer auf einem Kondensationspolymer basierenden Hülle,
wobei das Additionspolymer ein dreidimensional vernetztes Duromer ist.

13. Verfahren nach Anspruch 12, wobei die auf einem Additionspolymer basierenden Partikel durch eine Mischung aus einem trimeren Isocyanatmonomer und verschiedenen Mono-, Di- oder Triaminen mit einem Mischwerkzeug auf 150°C bis 250°C erhitzt werden und anschließend auf eine Korngröße (D99) von kleiner als 25gm vermahlen werden.

14. Verfahren nach einem der Ansprüche 12 oder 13, wobei im Schritt b) die im Schritt a) erhaltenen Partikel in einer Konzentration in einem Bereich von 1g/l bis 250g/l und ein Kondensations-Präpolymer in einer Menge des 0,1-fachen bis 10-fachen der Masse der im Schritt a) erhaltenen Partikel mit einem Homogenisator bei Temperaturen in einem Bereich von 10°C bis 100°C bei einem pH-Wert in einem Bereich von 1 bis 6,5 gerührt und dadurch mit einer Schutzhülle ummantelt werden.

15. Farbkonzentrat oder Druckfarbe mit einem Sicherheitspigment nach einem der Ansprüche 1 bis 11.

16. Polymermasse mit einem Sicherheitspigment nach einem der Ansprüche 1 bis 11.

17. Polymermasse nach Anspruch 16, wobei die Polymermasse in Form eines Wertdokument-Substrats, einer Sicherheitsfolie, einer Melierfaser oder einem Sicherheitsfaden vorliegt.

18. Wertdokument, Melierfaser, Sicherheitsfaden oder Sicherheitsfolie mit einem Sicherheitspigment nach einem der Ansprüche 1 bis 11.

## Claims

1. Security pigment comprising core-shell particles having a core based on an organic addition polymer, a shell based on an organic condensation polymer, and a feature substance present in the core in finely distributed or dissolved form, where the addition polymer is a three-dimensionally crosslinked thermoset, the condensation polymer of the shell is a melamine-formaldehyde resin, and the feature substance is a fluorescent or phosphorescent or photochromic or thermochromic feature substance or a UV or IR or VIS absorption dye.

2. Security pigment according to Claim 1, where the addition polymer is formed from trimeric isocyanate monomers.

3. Security pigment according to Claim 2, where the addition polymer is formed from isocyanurate trimers of isophorone diisocyanate and amines.

4. Security pigment according to Claim 3, where the amines are selected from mono-, di- and triamines.

5. Security pigment according to any of Claims 1 to 4, where the feature substance is an organic or an organometallic substance.

6. Security pigment according to any of Claims 1 to 5, where the fluorescent or phosphorescent feature substance is excitable in the UV spectral range and emits in the visible spectral range.

7. Security pigment according to any of Claims 1 to 5, where the fluorescent or phosphorescent feature substance emits in the IR spectral range.

8. Security pigment according to any of Claims 1 to 7, where two different luminescent dyes are present in the core, in finely distributed or dissolved form, and form an energy transfer system in which the first luminescent dye following excitation transfers its excitation energy partially or completely to the second luminescent dye.

9. Security pigment according to any of Claims 1 to 8, where the condensation polymer of the shell and the addition polymer of the core include at least one identical monomer as polymer constituent.

10. Security pigment according to any of Claims 1 to 9, where at the same time the addition polymer of the core comprises melamine as monomer.

11. Security pigment according to any of Claims 1 to 10, where the mass fraction of the shell is more than 10%, based on the mass of the core.

12. Method for producing a security pigment according to any of Claims 1 to 11, comprising
a) the step of providing a particle based on an addition polymer, with a feature substance present dissolved or finely distributed therein; and
b) the step of enveloping the particle obtained in step a) with a shell based on a condensation polymer, where the addition polymer is a three-dimensionally crosslinked thermoset.

13. Method according to Claim 12, where the particles based on an addition polymer are heated by a mixture of a trimeric isocyanate monomer and various mono-, di- or triamines with a mixing tool to 150°C to 250°C and subsequently are ground to a particle size (D99) of less than 25 µm.

14. Method according to either of Claims 12 and 13, where in step b) the particles obtained in step a) in a concentration in a range from 1 g/l to 250 g/l and a condensation prepolymer in an amount of 0.1 to 10 times the mass of the particles obtained in step a) are stirred with a homogenizer at temperatures in a range from 10°C to 100°C at a pH in a range from 1 to 6.5 and thereby clad with a protective shell.

15. Ink concentrate or printing ink with a security pigment according to any of Claims 1 to 11.

16. Polymer composition with a security pigment according to any of Claims 1 to 11.

17. Polymer composition according to Claim 16, where the polymer composition is present in the form of a document-of-value substrate, a security film, a mottled fibre or a security thread.

18. Document of value, mottled fibre, security thread or security film with a security pigment according to any of Claims 1 to 11.

## Revendications

1. Pigment de sécurité, comprenant des particules à noyau-enveloppe, présentant un noyau à base d'un polymère d'addition organique, une enveloppe à base d'un polymère de condensation organique et une substance aux caractéristiques distinctes se trouvant sous forme finement répartie ou dissoute dans le noyau, le polymère d'addition étant un duromère réticulé tridimensionnel, le polymère de condensation de l'enveloppe étant une résine de mélamine-formaldéhyde et la substance aux caractéristiques distinctes étant une substance aux caractéristiques distinctes fluorescente ou phosphorescente ou photochrome ou thermochrome ou un colorant d'absorption des UV, des IR ou des rayons VIS.

2. Pigment de sécurité selon la revendication 1, le polymère d'addition étant formé à partir de monomères d'isocyanate trimères.

3. Pigment de sécurité selon la revendication 2, le polymère d'addition étant formé à partir de trimères d'isocyanurate de diisocyanate d'isophorone et d'amines.

4. Pigment de sécurité selon la revendication 3, les amines étant choisies parmi les monoamines, les diamines et les triamines.

5. Pigment de sécurité selon l'une quelconque des revendications 1 à 4, la substance aux caractéristiques distinctes étant une substance organique ou organométallique.

6. Pigment de sécurité selon l'une quelconque des revendications 1 à 5, la substance aux caractéristiques distinctes fluorescente ou phosphorescente pouvant être excitée dans la plage spectrale des UV et émettant dans la plage spectrale visible.

7. Pigment de sécurité selon l'une quelconque des revendications 1 à 5, la substance aux caractéristiques distinctes fluorescente ou phosphorescente émettant dans la plage spectrale IR.

8. Pigment de sécurité selon l'une quelconque des revendications 1 à 7, deux colorants luminescents différents se trouvant sous forme finement répartie ou dissoute dans le noyau, lesquels colorants forment un système de transfert d'énergie dans lequel le premier colorant luminescent transfère, après excitation, son énergie d'excitation partiellement ou complètement au deuxième colorant luminescent.

9. Pigment de sécurité selon l'une quelconque des revendications 1 à 8, le polymère de condensation de l'enveloppe et le polymère d'addition du noyau comportant au moins un monomère identique comme constituant polymère.

10. Pigment de sécurité selon l'une quelconque des revendications 1 à 9, le polymère d'addition du noyau contenant simultanément de la mélamine comme monomère.

11. Pigment de sécurité selon l'une quelconque des revendications 1 à 10, la proportion massique de l'enveloppe représentant plus de 10% par rapport à la masse du noyau.

12. Procédé pour la fabrication d'un pigment de sécurité selon l'une quelconque des revendications 1 à 11, présentant
a) l'étape de mise à disposition d'une particule à base d'un polymère d'addition présentant une substance aux caractéristiques distinctives dissoute ou finement répartie dans celle-ci ; et
b) l'étape d'enrobage de la particule obtenue dans l'étape a) par une enveloppe à base d'un polymère de condensation,
le polymère d'addition étant un duromère réticulé tridimensionnel.

13. Procédé selon la revendication 12, les particules à base d'un polymère d'addition étant chauffées par un mélange constitué par un monomère d'isocyanate trimère et différentes monoamines, diamines ou triamines à l'aide d'un outil de mélange à 150°C jusqu'à 250°C et ensuite broyées à une grosseur de grains (D99) inférieure à 25 µm.

14. Procédé selon l'une quelconque des revendications 12 ou 13, dans lequel, dans l'étape b), les particules obtenues dans l'étape a), en une concentration dans une plage de 1 g/l à 250 g/l, et un prépolymère de condensation, en une quantité représentant 0,1 à 10 fois la masse des particules obtenues dans l'étape a), sont agités à l'aide d'un homogénéisateur à des températures dans une plage de 10°C à 100°C à une valeur de pH dans une plage de 1 à 6,5 et les particules sont ainsi enrobées par une enveloppe de protection .

15. Concentrat colorant ou encre d'impression présentant un pigment de sécurité selon l'une quelconque des revendications 1 à 11.

16. Masse polymère présentant un pigment de sécurité selon l'une quelconque des revendications 1 à 11.

17. Masse polymère selon la revendication 16, la masse polymère se trouvant sous forme d'un substrat de document de valeur, d'une feuille de sécurité, d'une fibre mélangée ou d'un fil de sécurité.

18. Document de valeur, fibre mélangée, fil de sécurité ou feuille de sécurité présentant un pigment de sécurité selon l'une quelconque des revendications 1 à 11.
